# EUROPÄISCHE PATENTSCHRIFT

(11) **EP 0 688 943 B1**
(45) Veröffentlichungstag und Bekanntmachung des Hinweises auf die Patenterteilung: **17.06.1998**
(21) Anmeldenummer: 95106485.6
(22) Anmeldetag: 28.04.1995
(51) Int. Cl.: F02B 27/02

(54) **Luftansauganlage einer mehrzylindrigen Brennkraftmaschine**
Air intake system for a multicylinder combustion engine
Système d'admission d'air d'un moteur à combustion multicylindrique

(30) Priorität: 19.05.1994 DE 4417472
(43) Veröffentlichungstag der Anmeldung: 27.12.1995
(73) Patentinhaber: Dr.Ing.h.c. F. Porsche Aktiengesellschaft, 70435 Stuttgart (DE)
(72) Erfinder: Horlacher, Wolfgang, D-70839 Gerlingen (DE)

(56) Entgegenhaltungen:
- EP-A- 0 167 794
- EP-A- 0 223 378
- DE-A- 2 932 089
- DE-A- 4 315 129
- GB-A- 2 096 740
- US-A- 3 840 042
- PATENT ABSTRACTS OF JAPAN vol. 11, no. 318 (M-632) (2765) 16. Oktober 1987 & JP-A-62 101 821 (HONDA) 12. Mai 1987

## Beschreibung

Die Erfindung betrifft eine Luftansauganlage nach dem Oberbegriff des Patentanspruchs 1.

Eine derartige Luftansauganlage ist beispielsweise aus der EP-A 167 794 bekannt. Diese beschreibt eine Luftansauganlage einer mehrzylindrigen Brennkraftmaschine mit zwei gegenüberliegenden Zylinderreihen, bei der die Zylinder einer Zylinderreihe jeweils mit Saugrohren an einen dieser Reihe zugeordneten Resonanzbehälter angeschlossen sind. Die Resonanzbehälter sind über ein Verbindungsrohr zusammengeschlossen, in dem eine schwenkbare Drosselklappe vorgesehen ist. Diese Luftansauganlage ist bezüglich Steigerung des Mitteldruckes über den gesamten Drehzahlbereich vorbildlich. So wird jedem Zylinder eine vergrößerte Frischluftmenge zugeführt, was eine deutliche Liefergradverbesserung bewirkt. Dabei wird gezielt eine Drosselklappe in einem Verbindungsrohr zwischen zwei Resonanzbehältern geschaltet.

Aus der DE-A 29 32 089 ist eine Absperrvorrichtung für Fluidströme bekannt, bei der eine Drosselscheibe und eine Lagerwelle quer zur Längsrichtung verlaufend in einem Rohrabschnitt angeordnet sind. Die Drosselscheibe und die Lagerwelle sind dazu über eine im Rohrabschnitt ausgebildete Ausnehmung in diesen eingebracht. Die Lagerwelle wird einerseits in einer ersten Lagerbohrung des Verbindungsrohres und andererseits in einer zweiten Lagerbohrung in einer die Ausnehmung schließenden, angeschraubten Lagerbrücke angeordnet.

Aufgabe der Erfindung ist es, diese Drosselklappe der Luftansauganlage bei guter Funktion konstruktiv sowie fertigungstechnisch zu optimieren.

Erfindungsgemäß wird diese Aufgabe durch die kennzeichnenden Merkmale des Patentanspruchs 1 gelöst. Weitere, die Erfindung ausgestaltenden Merkmale sind in den Unteransprüchen enthalten.

Die mit der Erfindung hauptsächlich erzielten Vorteile sind darin zu sehen, daß bei sicherer Betätigung der Drosselklappe ihre Montage mit der Lagerbrücke in das Verbindungsrohr einfach ist, welches Verbindungsrohr einteilig ausführbar ist. Dabei ist die Lagerbrücke bezüglich konstruktivem Aufbau übersichtlich gestaltet, und sie ist leicht, d.h. mit geringem Raumbedarf in besagtes Verbindungsrohr integrierbar. Die Lagerbrücke mit Drosselklappe ist eine vorgefertigte Baueinheit, die im Rahmen flexibler Fertigungsverfahren in die Luftansauganlage einbaubar ist. Die Dichtbahnen zwischen Lagerbrücke und Verbindungsrohr sowie der dazwischen angeordnete Dichtkörper stellen einen gasdichten Einbau der Lagerbrücke sicher. Schließlich bietet die Gestaltung der Lagerbrücke den Einsatz unterschiedlicher Werkstoffe, z.B. Kunststoff oder Leichtmetall.

In der Zeichnung ist ein Ausführungsbeispiel der Erfindung gezeigt, das nachstehend näher beschrieben ist.

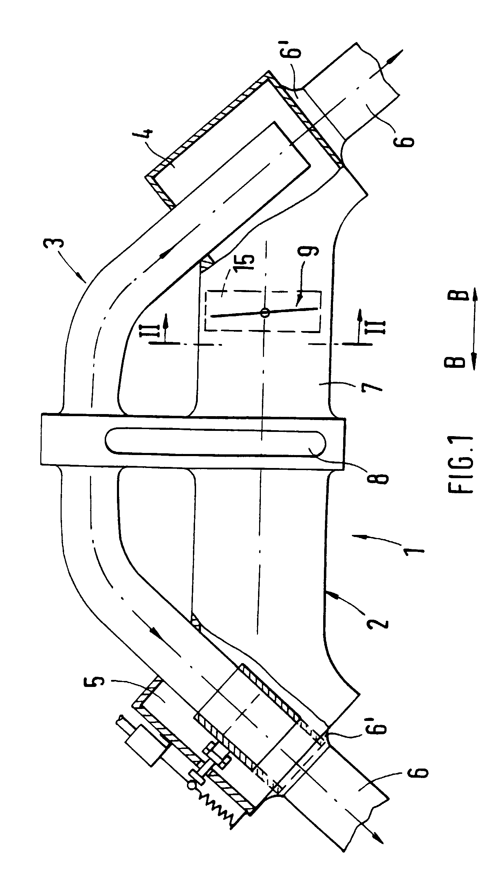

Es zeigt
- Fig. 1: eine schematische, teilweise geschnittene Seitenansicht einer Luftansauganlage,
- Fig. 2: einen Schnitt nach der Linie II - II der Fig. 1 in größerem Maßstab,
- Fig. 3: eine Teilansicht in Pfeilrichtung A der Fig. 2.

Eine Brennkraftmaschine mit zwei Zylinderreihen weist eine aus einem Kunststoff oder einer Leichtmetall-Legierung hergestellte Luftansauganlage auf, die ein Zweikammer-Resonanzsystem 2 und ein Einkammer-Schwingrohrsystem 3 umfaßt.

Das Resonanzsystem 2 ist mit den Zylinderreihen zugeordneten Resonanzbehältern 4, 5 versehen, an welche einzelne zu Zylindern der Brennkraftmaschine führende Saugrohre 6 mittels Einströmtrichter 6' angeschlossen sind.

Zwischen den Resonanzbehältern 4, 5 erstreckt sich wenigstens ein einteiliges Verbindungsrohr 7, dem über einen Frischlufteintritt 8 Luft zugeführt wird. Innerhalb des Verbindungsrohres 7 ist zumindest eine schwenkbare Drosselklappe 9 angeordnet, die mittels einer Druckdose 10 betätigt wird.

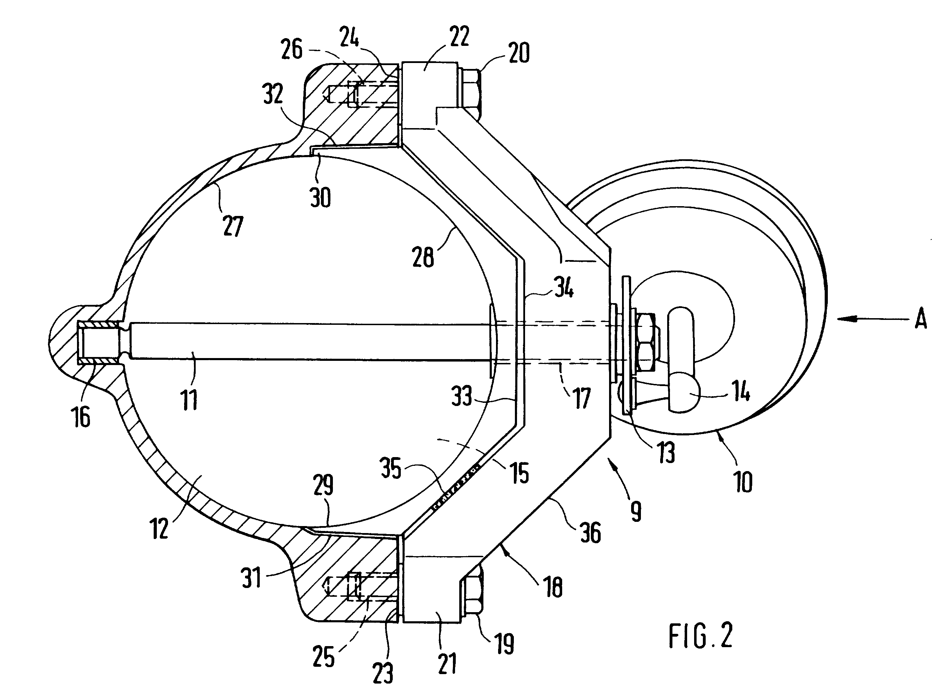

Die Drosselklappe 9 umfaßt eine Lagerwelle 11, eine die Durchströmung steuernde Drosselscheibe 12 und einen Betätigungshebel 13, der über ein Gestänge 14 mit der Druckdose 10 verbunden ist (Fig. 2).

Die Drosselklappe 9 ist mit Lagerwelle 11 und Drosselscheibe 12 über eine schlitzartige Ausnehmung 15 im Verbindungsrohr 7 in letzteres eingeführt; die Ausnehmung 15 erstreckt sich quer zur Längsrichtung B - B des Verbindungsrohres 7.

Außerdem ist die Lagerwelle 11 einerseits in einer ersten Lagerbohrung 16 des Verbindungsrohres 7 und andererseits in einer zweiten Lagerbohrung 17 einer Lagerbrücke 18 angeordnet, die die Ausnehmung 15 schließt und mittels Schrauben 19, 20 am Verbindungsrohr 7 gehalten ist. Hierzu weist die Lagerbrücke 18, die aus einem Kunststoff oder einer Leichtmetall-Legierung bestehen kann beabstandete Befestigungsaugen 21 auf, die an Aufnahmen 23, 24 des Verbindungsrohres 7 herangeführt sind. Die Schrauben 19, 20 sind in Gewinde 25, 26 des Verbindungsrohres 7 eingedreht.

Damit eine störungsfreie Luftströmung im Bereich der Ausnehmung 15 sichergestellt ist, ist die Lagerbrücke 18 mit einem eine innere Rohrwandung 27 ergänzenden Abschnitt 28 versehen. Freie Enden 29, 30 des Abschnittes 28 überdecken Wandbereiche 31, 32 des Verbindungsrohres 7.

Außerhalb der inneren Rohrwandung 27 ist am Verbindungsrohr 7 eine erste Dichtbahn 33 vorgesehen, an die eine zweite korrespondierende Dichtbahn 34 der Lagerbrücke 18 herangeführt ist. Zwischen den Dichtbahnen 33, 34 ist ein Dichtkörper 35 aus elastischem und/oder formsteifen Werkstoff vorgesehen. Beide Dichtbahnen 33,34 weisen trapezartige Form auf; ebenso eine äußere Begrenzung 36 der Lagerbrücke 18.

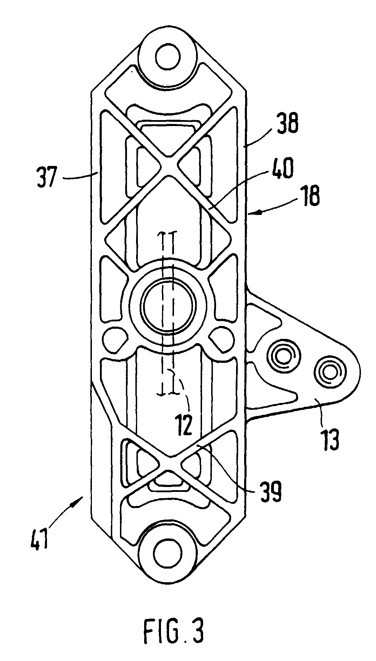

Die Lagerbrücke 18 umfaßt - Fig. 3 - quer zur Längsrichtung B - B des Verbindungsrohres 7 verlaufende Stege 37, 38, die durch gitterartig verlaufende Rippen 39, 40 versteift sind.

Schließlich bilden die Lagerbrücke 18 und die Drosselklappe 9 mit Lagerwelle 11, Drosselscheibe 12 sowie Betätigungshebel 13 eine vorgefertigte Baueinheit 41, die komplett in das Verbindungsrohr 7 eingesetzt wird.

## Patentansprüche

1. Luftansauganlage einer mehrzylindrigen Brennkraftmaschine mit zwei gegenüberliegenden Zylinderreihen, wobei die Zylinder einer Zylinderreihe jeweils mit Saugrohren an einen dieser Reihen zugeordneten Resonanzbehälter angeschlossen sind, welche Resonanzbehälter mit wenigstens einem Verbindungsrohr zusammengeschlossen sind, in dem eine schwenkbare Drosselklappe vorgesehen ist, dadurch gekennzeichnet, daß eine Drosselscheibe (12) und eine Lagerwelle (11) der Drosselklappe (9) über eine quer zur Längsrichtung (B - B) des Verbindungsrohres (7) verlaufende schlitzartige Ausnehmung (15) in das Verbindungsrohr (7) eingebracht sind und die Lagerwelle (11) einerseits in einer ersten Lagerbohrung (16) des Verbindungsrohrs (7) und andererseits in einer zweiten Lagerbohrung (7) in einer die Ausnehmung (15) schließenden, geschraubten Lagerbrücke angeordnet ist, und daß die Lagerbrücke (18) im Bereich der Ausnehmung (15) einen eine innere Rohrwandung (27) des Verbindungsrohres (7) ergänzenden Abschnitt (28) aufweist, derart, daß eine störungsfreie Luftströmung im Bereich der Ausnehmung (15) sichergestellt ist.

2. Luftansauganlage nach Anspruch 1, dadurch gekennzeichnet, daß freie Enden (29, 30) des Abschnittes (28) Wandbereiche (31, 32) des Verbindungsrohres (7) überdecken.

3. Luftansauganlage nach Anspruch 1, dadurch gekennzeichnet, daß die Lagerbrücke (18) beabstandete Befestigungsaugen (21, 22) umfaßt, die an Aufnahmen (23, 24) des Verbindungsrohres herangeführt sind, wobei zwischen den Befestigungsaugen (21, 22) und den Aufnahmen (23, 24) Schrauben (19, 20) wirksam sind.

4. Luftansauganlage nach Anspruch 1, dadurch gekennzeichnet, daß die Drosselklappe (9) und die Lagerbrücke (18) eine vorgefertigte Baueinheit (41) bilden.

5. Luftansauganlage nach Anspruch 1, dadurch gekennzeichnet, daß außerhalb der inneren Rohrwandung (27) des Verbindungsrohres (7) eine erste Dichtbahn (33) des Verbindungsrohres (7) und eine zweite Dichtbahn (34) der Lagerbrücke (18) vorgesehen sind, zwischen denen ein Dichtkörper (35) angeordnet ist.

6. Luftansauganlage nach Anspruch 5, dadurch gekennzeichnet, daß die Dichtbahnen (33, 34) trapezartige Form aufweisen.

7. Luftansauganlage nach einem oder mehreren der vorangehenden Ansprüche, dadurch gekennzeichnet, daß die Lagerbrücke (18) eine äußere Begrenzung (36) umfaßt, die trapezartige Form aufweist.

8. Luftansauganlage nach einem oder mehreren der vorangehenden Ansprüche, dadurch gekennzeichnet, daß die Lagerbrücke quer zur Längsrichtung des Verbindungsrohres (7) verlaufende Stege (37, 38) umfaßt, die durch gitterartig verlaufende Rippen (39, 40) versteift sind.

## Claims

1. An air-intake unit of a multiple-cylinder internal-combustion engine having two opposed cylinder rows, the cylinders of one cylinder row each being connected to respective intake pipes on a resonance container associated with the said row, and the resonance containers being combined with at least one connecting pipe in which a pivotable throttle valve is provided, **characterized in that** a throttle disc (12) and a bearing shaft (11) of the throttle valve (9) are inserted in the connecting pipe (7) by way of a slot-like recess (15) extending transversely to the longitudinal direction (**B-B**) of the connecting pipe (7), and the bearing shaft (11) is arranged at one end in a first bearing bore (16) in the connecting pipe (7) and at the other end in a second bearing bore (17) in a bolted bearing bridge closing the recess (15), and the bearing bridge (18) is provided in the region of the recess (15) with a portion (28) complementing an inner wall (27) of the connecting pipe (7) in such a way as to ensure a trouble-free air flow in the region of the recess (15).

2. An air-intake unit according to Claim 1, **characterized in that** the free ends (29, 30) of the portion (28) cover areas (31, 32) of the wall of the connecting pipe (7).

3. An air-intake unit according to Claim 1, **characterized in that** the bearing bridge (18) comprises spaced fastening lugs (21, 22) which are brought up against receiving means (23, 24) of the connecting pipe, wherein bolts (19, 20) are effective between the fastening lugs (21, 22) and the receiving means (23, 24).

4. An air-intake unit according to Claim 1, **characterized in that** the throttle valve (9) and the bearing bridge (18) form a pre-fabricated structural unit (41).

5. An air-intake unit according to Claim 1, **characterized in that** a first sealing path (33) of the connecting pipe (7) and a second sealing path (34) of the bearing bridge (18), between which a sealing member (35) is arranged, are provided outside the inner pipe wall (27) of the connecting pipe (7).

6. An air-intake unit according to Claim 5, **characterized in that** the sealing paths (33, 34) have a trapezoidal shape.

7. An air-intake unit according to one or more of the preceding Claims, **characterized in that** the bearing bridge (18) is provided with an outer boundary (36) which has a trapezoidal shape.

8. An air-intake unit according to one or more of the preceding Claims, **characterized in that** the bearing bridge comprises webs (37, 38) which extend transversely to the longitudinal direction of the connecting pipe (7) and which are reinforced by ribs (39, 40) extending in the manner of a lattice.

## Revendications

1. Système d'admission d'air d'un moteur à combustion interne à plusieurs cylindres avec deux lignes de cylindres en vis-à-vis, les cylindres d'une ligne étant raccordés chacun avec des tubes d'admission à un récipient de résonance associé à l'une de ces lignes, lesquels récipients de résonance étant réunis par au moins un tube de liaison, dans lequel est prévu un clapet d'étranglement pivotable, caractérisé en ce qu'un disque d'étranglement (12) et un arbre de palier (11) du clapet d'étranglement (9) sont introduits dans le tube de liaison (7), par un évidement (15) du type d'une fente s'étendant transversalement à la direction longitudinale (B-B) du tube de liaison (7) et l'arbre de palier (11) est monté d'une part dans un premier perçage de palier (16) du tube de liaison (7) et d'autre part, dans un deuxième perçage de palier (7) dans un pont de palier vissé, fermant l'évidement (15), et en ce que le pont de palier (18), présente dans la région de l'évidement (15), une partie (28) complétant une paroi de tube (27) intérieure du tube de liaison (7), de manière à assurer un courant d'air non perturbé dans la région de l'évidement (15).

2. Système d'admission d'air selon la revendication 1, caractérisé en ce que des extrémités libres (29, 30) de la partie (28) recouvrent des zones de paroi (31, 32) du tube de liaison (7).

3. Système d'admission d'air selon la revendication 1, caractérisé en ce que le pont de palier (18) comprend des oeillets de fixation (21, 22) espacés, qui sont rapprochés de logements (23, 24) du tube de liaison, des vis (19, 20) opérant entre les oeillets de fixation (21, 22) et les logements (23, 24).

4. Système d'admission d'air selon la revendication 1, caractérisé en ce que le clapet d'étranglement (9) et le pont de palier (18) forment une unité de construction (41) préfabriquée.

5. Système d'admission d'air selon la revendication 1, caractérisé en ce qu'à l'extérieur de la paroi intérieure (27) du tube de liaison (7) sont prévues une première voie d'étanchéité (33) du tube de liaison (7) et une deuxième voie d'étanchéité (34) du pont de palier (18), entre lesquelles est placé un corps d'étanchéité (35).

6. Système d'admission d'air selon la revendication 5, caractérisé en ce que les voies d'étanchéité (33, 34) ont une forme en trapèze.

7. Système d'admission d'air selon une ou plusieurs des revendications précédentes, caractérisé en ce que le pont de palier (18) comprend une délimitation (36) extérieure, qui a la forme d'un trapèze.

8. Système d'admission d'air selon une ou plusieurs des revendications précédentes, caractérisé en ce que le pont de palier comprend des entretoises (37, 38) s'étendant transversalement à la direction longitudinale du tube de liaison (7), qui sont renforcées par des nervures (39, 40) s'étendant à la manière d'une grille.
